# EUROPÄISCHE PATENTSCHRIFT

(11) **EP 0 966 844 B1**
(45) Veröffentlichungstag und Bekanntmachung des Hinweises auf die Patenterteilung: **24.10.2001**
(21) Anmeldenummer: 98923990.0
(22) Anmeldetag: 11.03.1998
(51) Int. Cl.: H04Q 1/14

(54) **VERTEILEREINRICHTUNG MIT BLOCKARTIG ANEINANDERGEREIHTEN VERBINDUNGSBAUTEILEN**
DISTRIBUTOR WITH INLINE BLOCKSHAPED INLINE CONNECTOR COMPONENTS
DISPOSITIF DE DISTRIBUTION AVEC COMPOSANTS DE RACCORDEMENT DISPOSES EN RANGEES LES UNS A COTE DES AUTRES SOUS FORME DE BLOCS

(30) Priorität: 13.03.1997 DE 19710479
(43) Veröffentlichungstag der Anmeldung: 29.12.1999
(73) Patentinhaber: RXS Gesellschaft für Vermögensverwaltung mbH, 80333 München (DE)
(72) Erfinder: NATH, Torsten, D-10367 Berlin (DE)
(74) Vertreter: Viering, Jentschura & Partner
(86) Internationale Anmeldenummer: DE9800719
(87) Internationale Veröffentlichungsnummer: WO9841035

(56) Entgegenhaltungen:
- DE-A- 2 048 104
- DE-C- 3 836 668

## Beschreibung

Die Erfindung bezieht sich auf eine Verteilereinrichtung mit blockartig aneinandergereihten Verbindungsbauteilen für ankommende und abgehende Leitungen einer Telekommunikationsanlage, wobei die Verteilereinrichtung einen Träger für die Verbindungsbauteile aufweist, der mit Einbauplätzen für zwischen den Verbindungsbauteilen angeordnete Führungselemente versehen ist, in denen die Leitungen zu frontseitig an den Verbindungsbauteilen angeordneten Verbindungsstellen führbar sind.

Eine derartige Einrichtung ist z.B. durch die DE 20 48 104 C1 bekannt geworden. Es ist üblich, derartige Führungselemente als separate Drahtführungen auszubilden, bei denen bogenförmig gekrümmte Drahtführungskanäle von der Frontseite eines Verteilerblockes zu den angrenzenden Seitenwänden verlaufen. Durch die Drahtführungskanäle ist es möglich, die ankommenden und abgehenden Leitungen zu den zugehörigen Anschlußelementen von Kontaktbauteilen an der Frontseite zu führen, wobei in dem Verteilerblock jeweils eine Drahtführung und ein Kontaktbauteil abwechselnd übereinandergestapelt sind. Als Verbindungselemente werden Schneidklemmen verwendet, an die die einfachen isolierten zweiadrigen Kupferleitungen angeschlossen werden.

Moderne Telekommunikationseinrichtungen verwenden zunehmend höher frequente Leitungen, die andere Verbindungselemente erfordern.

Der Erfindung liegt die Aufgabe zugrunde, über den Verteiler unterschiedliche Arten von Leitungen zu führen und miteinander zu verbinden. Diese Aufgabe wird durch die Erfindung gemäß Anspruch 1 gelöst.

Die Sonderleitungen sind z.B. als Koaxialleitungen oder auch als Lichtwellenleiter ausgebildet, die z.B. über Steckverbindungselemente miteinander verbunden werden. Derartige Verbindungselemente erfordern mehr Einbauplatz als z.B. herkömmliche Schneidklemmen. Durch die Erfindung ist es möglich, den Einbauplatz für die Sonderbauteile soweit zu verbreitern, daß auch relativ dicke Steckverbinderelemente für Koaxialleiter aufgenommen und gehandhabt werden können. Dies ist dadurch möglich, daß die Dicke der Drahtführungselemente erheblich größer ist als die der üblichen Verbindungsbauteile für niedriger frequente Leitungen.

Vorteilhafte Weiterbildungen der Erfindung sind in den Unteransprüchen gekennzeichnet:

Durch die Weiterbildung nach Anspruch 2 kann der Einbauplatz für die Sonderbauteile noch mehr erweitert werden.

Durch das Blechteil nach Anspruch 3 können im Träger vorhandene Öffnungen weitgehend abgedeckt und elektromagnetisch geschirmt werden.

Durch die Weiterbildung nach Anspruch 4 kann das Blechteil auch seitliche Öffnungen des Trägers weitgehend überdecken.

Der Kunststoffkörper nach Anspruch 5 läßt sich als kostengünstiges Spritzgußteil ausbilden, in dem die Aufnahmen nach Anspruch 6 für die Verbindungselemente montagetechnisch günstig ausgebildet werden können. Insbesondere ist es von Vorteil, an den Kunststoffkörpern Halteelemente anzubringen, die zu denen der Führungselemente kompatibel sind. Dadurch lassen sich die Kunststoffkörper in einfacher Weise mit dem Träger für die Verbindungsbauteile verrasten.

Im folgenden wird die Erfindung anhand eines in der Zeichnung dargestellten Ausführungsbeispieles näher erläutert.
- Figur 1: zeigt eine Seitenansicht einer blockartigen Verteilereinrichtung 1,
- Figur 2: eine Frontansicht der Verteilereinrichtung nach Figur 1.

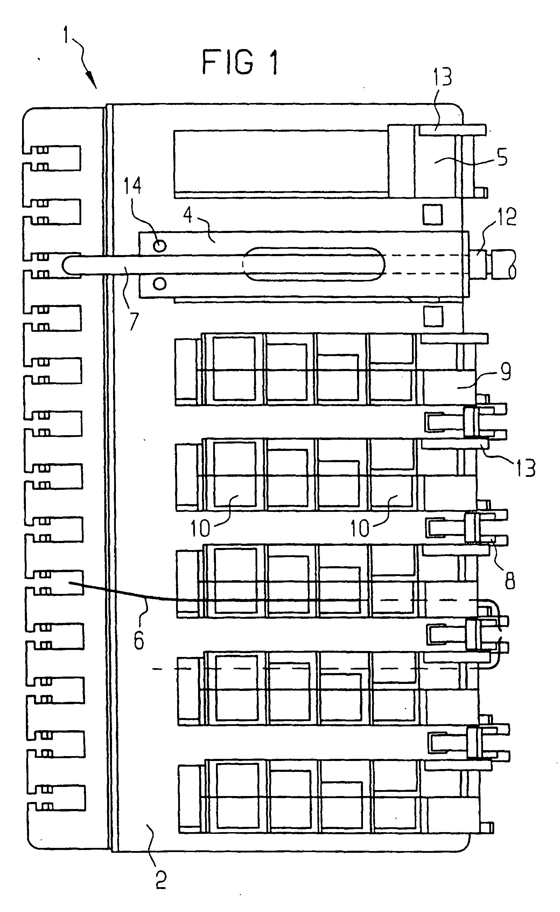

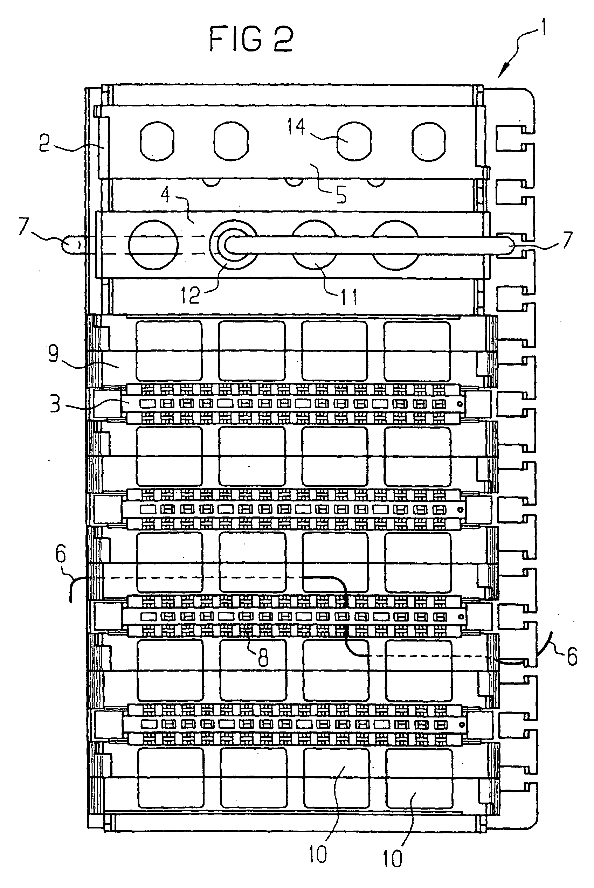

Nach den Figuren 1 und 2 weist eine blockartige Verteilereinrichtung einen aus Blech gebogenen Träger 2 auf, an dem Verbindungsbauteile 3, 4, 5 zum Anschluß bzw. Verbinden von ankommenden und abgehenden Leitungen 6, 7 gehalten sind.

Im unteren Teil der Abbildungen sind die Verbindungsbauteile als schmale Kontaktbauteile 3 ausgebildet, die mit einer Doppelreihe von Schneidklemmen 8 zum Anschluß von als einfache Kupferleitungen 6 ausgebildeten ankommenden und abgehenden Leitungen versehen sind. Zwischen jeweils zwei benachbarten Kontaktbauteilen 3 ist ein Führungselement 9 für die Kupferleitungen 6 vorgesehen, daß mit z.B. bogenförmig verlaufenden Kanälen 9 versehen ist, in denen die Kupferleitungen 6 von an die Frontseite angrenzenden Seitenflächen der Verteilereinrichtung 1 zu den zugehörigen Schneidklemmen 8 der Kontaktbauteile 3 geführt sind.

Nach dem oberen Teil der Darstellung sind anstelle der Führungselemente 9 am Träger 2 andere Verbindungsbauteile in Form von Sonderbauteilen 4, 5 befestigt, die der Verbindung von als Sonderleitungen 7 ausgebildeten ankommenden und abgehenden Leitungen dienen. Derartige Leitungen können z.B. als Koaxialleiter oder Lichtwellenleiter ausgebildet sein. Eines der Sonderbauteile 4, 5 ist hier als deckelartiges Blechteil 4 ausgebildet, das Durchbrüche 11 zur Befestigung von als Steckverbinder ausgebildeten Verbindungselementen 12 aufweist, über die die Sonderleitungen 7 miteinander verbunden sind. Das Blechteil 4 ist U-förmig gebogen und umgreift sowohl die Frontseite wie auch die angrenzenden Seitenwände des Trägers 2. Es ist hier mittels schraubenartigen Befestigungselementen 15 am Träger 2 gehalten.

Ein weiteres Sonderbauteil ist hier als leistenartiger Kunststoffkörper 5 ausgebildet, der mittels rasthakenartiger Halteelemente 13 am Träger 2 befestigt ist. Derartige Halteelemente 13 sind auch an den Führungselementen 9 angebracht und zueinander kompatibel ausgebildet. Dadurch ist es möglich, Führungselemente 9 und Kunststoffkörper 5 wechselweise an beliebigen Einbauplätzen der Verteilereinrichtung 1 einzusetzen. Der Kunststoffkörper 5 ist mit Aufnahmen 14 zum Einsetzen der Verbindungselemente 12 versehen.

## Patentansprüche

1. Verteilereinrichtung (1) mit blockartig aneinandergereihten Verbindungsbauteilen (3, 4, 5) für ankommende und abgehende Leitungen (6, 7) einer Telekommunikationsanlage, wobei die Verteilereinrichtung (1) einen Träger (2) für die Verbinderbauteile (3, 4, 5) aufweist, der mit Einbauplätzen für zwischen den Verbindungsbauteilen (z.B. 3) angeordnete Führungselemente (9) versehen ist, in denen die Leitungen (z.B. 6) zu frontseitig an den Verbindungsbauteilen (3, 4, 5) angeordneten Verbindungsstellen führbar sind,
**dadurch gekennzeichnet,**
**daß** zumindest eine Teilmenge der Verbindungsbauteile als Sonderbauteile (4, 5) ausgebildet sind, an denen als Sonderleitungen (7) ausgebildete Leitungen miteinander verbindbar sind und
**daß** die Sonderbauteile (4, 5) wahlweise am Träger anstelle jeweils eines der Führungselemente (9) befestigbar sind.

2. Verteilereinrichtung nach Anspruch 1,
**dadurch gekennzeichnet,**
**daß** das Sonderbauteil (4, 5) anstelle eines der Führungselemente und eines der angrenzenden Verbindungsbauteile (3) für schmalbandige Kupferleitungen (6) am Träger (2) befestigbar sind.

3. Verteilereinrichtung nach Anspruch 1 oder 2,
**dadurch gekennzeichnet,**
**daß** das Sonderbauteil als deckelartiges Blechteil (4) ausgebildet ist, in dem Durchbrüche (11) zur Aufnahme von Verbindungselementen (z.B. 12) für die Sonderleitungen (7) vorgesehen sind.

4. Verteilereinrichtung nach Anspruch 3,
**dadurch gekennzeichnet,**
**daß** das Blechteil (4) als U-förmig gebogener Streifen ausgebildet ist, der mit seinen Seitenschenkeln an die Frontseite angrenzende Seitenwände des Trägers (2) umgreift und der in diesem Bereich am Träger (2) z.B. durch schraubenartige Befestigungselemente (15) gehalten ist.

5. Verteilereinrichtung nach Anspruch 1 oder 2,
**dadurch gekennzeichnet,**
**daß** das Sonderbauteil als leistenartiger Kunststoffkörper (5) ausgebildet ist, der mit Halteelementen (13) zur Befestigung am Träger (2) versehen ist und
**daß** die Halteelemente (13) mit Halteelementen (13) der Führungselemente (9) kompatibel sind.

6. Verteilereinrichtung nach Anspruch 5,
**dadurch gekennzeichnet,**
**daß** der Kunststoffkörper (5) mit Aufnahmen (14) zum Einsetzen der Verbindungselemente (12) versehen ist.

## Claims

1. A distributor device (1) with connecting components (3, 4, 5) arranged in a row like a block for incoming and outgoing lines (6, 7) of a telecommunications system, wherein the distributor device (1) has a base (2) for the connector components (3, 4, 5), which is provided with installation slots for guide elements (9) which are arranged between the connecting components (for example 3) and in which the lines (for example 6) can be routed to connecting points which are arranged at the front one of the connecting components (3, 4, 5),
**characterized**
**in that** at least some of the connecting components are in the form of special components (4, 5) at which lines which are in the form of special lines (7) can be connected to one another, and
**in that** the special components (4, 5) can optionally be attached to the base instead of in each case one of the guide elements (9).

2. The distributor device as claimed in claim 1,
**characterized**
**in that** the special components (4, 5) can be attached to the base (2) instead of one of the guide elements and one of the adjacent connecting components (3) for narrowband copper lines (6).

3. The distributor device as claimed in claim 1 or 2,
**characterized**
**in that** the special component is in the form of a cover-like sheet-metal part (4) in which apertures (11) are provided for holding connecting elements (for example 12) for the special lines (7).

4. The distributor device as claimed in claim 3,
**characterized**
**in that** the sheet-metal part (4) is in the form of a strip which is bent in a U-shape, whose side limbs engage around
side walls of the base (2) which are adjacent to the front face, and which is held in this region on the base (2), for example by screw-like attachment elements (15).

5. The distributor device as claimed in claim 1 or 2,
**characterized**
**in that** the special component is in the form of a strip-like plastic body (5) which is provided with retaining elements (13) for attachment to the base (2), and
**in that** the retaining elements (13) are compatible with retaining elements (13) of the guide elements (9).

6. The distributor device as claimed in claim 5,
**characterized**
**in that** the plastic body (5) is provided with holders (14) for the insertion of the connecting elements (12).

## Revendications

1. Dispositif de distribution (1) avec des composants de connexion (3, 4, 5) disposés en rangées les uns à côté des autres sous forme de blocs pour des lignes d'entrée et de départ (6, 7) d'une installation de télécommunication, le dispositif de distribution (1) étant pourvu d'un support (2) pour les composants de connexion (3, 4, 5), lequel est pourvu de lieux d'emplacement pour des éléments de guidage (9) arrangés entre les composants de connexion (par exemple 3), dans lesquels les lignes (par exemple 6) peuvent être guidées à des points de connexion arrangés au front des composants de connexion (3, 4, 5),
**caractérisé en ce**
**qu'**au moins une partie des composants de connexion est formée comme composants spéciaux (4, 5), auxquels des lignes formées comme lignes spéciales (7) peuvent être jointes l'une à l'autre et
que les composants spéciaux (4, 5) peuvent en option être attachés au support au lieu d'un des éléments de guidage (9) respectivement.

2. Dispositif de distribution selon la revendication 1,
**caractérisé en ce**
**que** le composant spécial (4, 5) au lieu d'un des éléments de guidage et d'un des composants de connexion avoisinants (3) pour lignes en cuivre à bande étroite (6) peut être attaché au support (2).

3. Dispositif de distribution selon la revendication 1 ou 2,
**caractérisé en ce**
**que** le composant spécial est formé comme pièce en tôle sous forme de couvercle (4), dans lequel des ouvertures (11) sont pourvues pour recevoir des éléments de connexion (par exemple 12) pour les lignes spéciales (7).

4. Dispositif de distribution selon la revendication 3,
**caractérisé en ce**
**que** la pièce en tôle (4) est formée comme bande courbée en forme d'U, laquelle enveloppe avec ses côtés latéraux des faces latérales du support (2) avoisinant au front, et qui est retenue dans cette région au support (2) par exemple par des éléments de fixation sous forme de vis (15).

5. Dispositif de distribution selon la revendication 1 ou 2, **caractérisé en ce**
**que** le composant spécial est formé comme corps en plastique (5) sous forme de barre, qui est pourvu d'éléments de retenue (13) pour la fixation au support (2), et
que les éléments de retenue (13) sont compatibles avec des éléments de retenue (13) des éléments de guidage (9).

6. Dispositif de distribution selon la revendication 5,
**caractérisé en ce**
**que** le corps en plastique (5) est pourvu de points de réception (14) pour l'emplacement des éléments de connexion (12).
